# EUROPÄISCHE PATENTANMELDUNG

(11) **EP 1 842 617 A1**
(43) Veröffentlichungstag der Anmeldung: **10.10.2007**
(21) Anmeldenummer: 07105507.3
(22) Anmeldetag: 02.04.2007
(51) Int. Cl.: B23K 26/14, B23K 26/42, B23K 26/00, C21D 1/09, C21D 9/46

(54) **Verfahren und Vorrichtung zum partiellen Härten von Blechen oder Halbzeugen unter Verwendung eines Laserstrahles und Schutzbegasung mit einem Schutzgas mit festem Aggregatzustand; Blech oder Halbzeug aus Stahl mit partieller Härtung**

(30) Priorität: 04.04.2006 DE 102006016112; 05.04.2006 DE 102006016348
(71) Anmelder: ThyssenKrupp Technologies AG, 45128 Essen (DE)
(72) Erfinder: Polzin, Ralf, 57233 Kreuztahl-Ferndorf (DE); Meyer zu Borgsen, Bernd, 33649 Bielefeld (DE); Horstkott, Dirk, 49205 Hasbergen (DE)
(74) Vertreter: Cohausz & Florack

(57) **Zusammenfassung**

Die Erfindung betrifft ein Verfahren zum partiellen Härten von Blechen (6) oder Halbzeugen aus Stahl oder einer Stahllegierung, bei welchem zum partiellen Härten ein Laserstrahl (3) verwendet wird und eine Schutzbegasung mit einem Schutzgas oder einem Schutzgasgemisch erfolgt.
Daneben betrifft die Erfindung ein partiell lasergehärtetes Blech (6) oder Halbzeug sowie eine Vorrichtung zum partiellen Härten von Blechen (6) oder Halbzeugen aus Stahl oder einer Stahllegierung, mit Mitteln (2) zur Erzeugung eines Laserstrahls (3) zum partiellen Härten eines Blechs oder eines Halbzeugs und Mitteln (4,5) zur Schutzbegasung des Blechs (6) oder Halbzeugs zumindest im Bereich des Laserstrahls (3). Die Aufgabe, ein Verfahren sowie eine Vorrichtung zum partiellen Härten von Blechen (6) oder Halbzeugen zur Verfügung zu stellen, mit welchem bzw. mit welcher Bleche (6) oder Halbzeuge hergestellt werden können, die in den gehärteten Bereichen eine verbesserte Festigkeit aufweisen, wird für ein Verfahren dadurch gelöst, dass das Schutzgas oder Schutzgasgemisch zur Abschreckung des partiell erwärmten Blechs (6) oder Halbzeugs verwendet wird und über die Schutzbegasung eine Abschreckung des partiell erwärmten Bereichs des Blechs (6) oder Halbzeugs unterhalb der Martensit-Finish-Temperatur, vorzugsweise unterhalb der Raumtemperatur erfolgt.

## Beschreibung

Die Erfindung betrifft ein Verfahren zum partiellen Härten von Blechen oder Halbzeugen aus Stahl oder einer Stahllegierung, bei welchem zum partiellen Härten ein Laserstrahl verwendet wird und eine Schutzbegasung mit einem Schutzgas oder einem Schutzgasgemisch erfolgt. Daneben betrifft die Erfindung ein partiell lasergehärtetes Blech oder Halbzeug sowie eine Vorrichtung zum partiellen Härten von Blechen oder Halbzeugen aus Stahl oder einer Stahllegierung, mit Mitteln zur Erzeugung eines Laserstrahls zum partiellen Härten eines Blechs oder eines Halbzeugs und Mitteln zur Schutzbegasung des Blechs oder Halbzeugs zumindest im Bereich des Laserstrahls.

In vielen Anwendungsbereichen, insbesondere jedoch im Fahrzeugbau, werden verwendete Bleche oder Halbzeuge im Hinblick auf deren Festigkeit optimiert, um möglichst geringe Materialdicken und damit ein möglichst geringes Gewicht bei gleichen Festigkeitseigenschaften zu erzielen. Beispielsweise werden Seitenaufprallträger und B-Säulenverstärkungen aus höherfesten Stahllegierungen hergestellt, wobei zunehmend warmumgeformte Vergütungsstähle verwendet werden. Diese Stahllegierungen müssen einer Warmumformung mit anschließender Abkühlung im Werkzeug unterzogen werden, um eine möglichst hohe Härte zu erreichen. Dadurch wird in der Regel das gesamte Bauteil gehärtet. Problematisch beim Einsatz derartiger Vergütungsstähle ist jedoch, dass das Deformationsverhalten, beispielsweise von Seitenaufprallträgern oder B-Säulen eines Kraftfahrzeuges mit einem komplett gehärteten Bauteil nicht optimal gestaltet werden kann. Aus der japanischen Patentanmeldung JP 60-238424 A ist zur Lösung dieses Problem ein Verfahren zum partiellen Härten eines Stahlbleches bekannt, bei welchem unter Verwendung eines Laserstrahls die Oberfläche eines Stahlbleches auf über 720 °C erhitzt wird und anschließend auf 500 °C abgeschreckt wird, um eine Martensitbildung zu bewirken. Es wird vorgeschlagen das Abschrecken durch Luft, gasförmigen Stickstoff oder Wasser vorzunehmen. Daneben ist die Verwendung der sogenannten Selbstabschreckung, d.h. die Abschreckung erfolgt durch Wärmeabfluss ins Bauteilinnere bzw. in angrenzende Bereiche, beim partiellen Härten von Blechen oder Halbzeugen aus der deutschen Offenlegungsschrift DE 101 40 675 A1 bekannt. Nachteilig bei beiden Verfahren ist nun, dass die gehärteten Bereiche der Bleche und Halbzeuge weiterhin keine optimale Festigkeit aufweisen.

Hiervon ausgehend liegt der vorliegenden Erfindung die Aufgabe zugrunde, ein Verfahren sowie eine Vorrichtung zum partiellen Härten von Blechen oder Halbzeugen zur Verfügung zu stellen, mit welchem bzw. mit welcher Bleche oder Halbzeuge hergestellt werden können, die in den gehärteten Bereichen eine verbesserte Festigkeit aufweisen.

Gemäß einer ersten Lehre der vorliegenden Erfindung wird die oben hergeleitete Aufgabe dadurch gelöst, dass das Schutzgas oder Schutzgasgemisch zur Abschreckung des partiell erwärmten Blechs oder Halbzeugs verwendet wird und über die Schutzbegasung eine Abschreckung des partiell erwärmten Bereichs des Blechs oder Halbzeugs unterhalb der Martensit-Finish-Temperatur, vorzugsweise unterhalb der Raumtemperatur erfolgt.

Es hat sich herausgestellt, dass bei einer Abschreckung des partiell unter Verwendung eines Laserstrahls erwärmten Blechs oder Halbzeugs unterhalb der Martensit-Finish-Temperatur der gesamte Austenitanteil des erhitzten Bereichs des Bleches in Martensit umgewandelt wird, so dass kein Restaustenitanteil im gehärteten Bereich des Blechs oder Halbzeugs verbleibt. Ein austenitisches Gefüge weist dagegen eine wesentlich geringere Festigkeit als martensitisches Gefüge auf. Im Ergebnis können mit dem erfindungsgemäßen Verfahren partiell gehärtete Bleche oder Halbzeuge zur Verfügung gestellt werden, deren gehärtete Bereiche eine verbesserte Festigkeit aufweisen, so dass die Deformationseigenschaften entsprechender Bleche oder Halbzeuge wesentlich verbessert werden. Die Martensit-Finish-Temperatur ist abhängig von der Güte der eingesetzten Stahllegierung und liegt teilweise unterhalb von Raumtemperatur. Für diese Stahlgüten kann durch die erfindungsgemäße Abschreckung unterhalb von Raumtemperatur gezielt ein minimaler austenitischer Gefügeanteil in den gehärteten Bereichen belassen werden, um dass Dehnungsverhalten dieser Bereiche positiv zu beeinflussen.

Gemäß einer nächsten weitergebildeten Ausführungsform des erfindungsgemäßen Verfahrens erfolgt die Schutzbegasung mit einem Schutzgas oder einem Schutzgasgemisch in festem Aggregatzustand, insbesondere mit Kohlendioxid in Form von Trockeneis-Pellets. Die Verwendung eines Schutzgases oder eines Schutzgasgemisches in festem Aggregatzustand, beispielsweise Trockeneis, beinhaltet verschiedene Vorteile. Zunächst kommt es beim Aufprall der Festkörperteilchen des Schutzgasgemisches auf das Blech oder Halbzeug aufgrund der kinetischen Energie der Festkörperteilchen zu einem Sandstrahleffekt, so dass die Bleche und Halbzeuge gereinigt werden. Die punktuelle Unterkühlung führt beim Aufprall zu einem Abplatzen der Schmutzschicht aufgrund der unterschiedlichen Wärmeausdehnung von der Schmutzschicht, beispielsweise einer Oxidschicht, und dem Werkstoff des Blechs oder Halbzeugs. Aufgrund des Sublimationsvorganges der Schutzgas- oder Schutzgasgemischpartikel auf der Oberfläche des Blechs oder Halbzeugs wird die Schmutzschicht zusätzlich abgesprengt wird. Das anschließende Abschrecken unter Verwendung des Schutzgases oder des Schutzgasgemisches in festem Aggregatzustand führt aufgrund der extrem niedrigen Temperatur der Schutzgaspartikel zu einer sehr hohen Abschreckgeschwindigkeit. Die gehärteten Bereiche können ohne weiteres auf Temperaturen unterhalb der Martensit-Finish-Temperatur abgekühlt werden bzw. auch unterhalb der Raumtemperatur abgekühlt werden. Kohlendioxid stellt in diesem Zusammenhang ein Schutzgas dar, welches bereits bei einer Temperatur von -78 °C in festem Aggregatzustand vorliegt und in Form von Trockeneis-Pellets industriell verfügbar ist. Die Kosten zur Herstellung der Trockeneis-Pellets sind damit im Vergleich zur Herstellung anderer Schutzgase in fester Form relativ gering.

Die Eigenschaften eines Bleches oder eines Halbzeugs können dadurch weiter verbessert werden, dass das Blech oder Halbzeug partiell durchgehärtet wird und die Schutzbegasung von beiden Seiten des Blechs oder Halbzeugs erfolgt. Einerseits wird dadurch auf beiden Seiten des Blechs eine Oxidation der Oberfläche durch die erfindungsgemäße Schutzbegasung verhindert. Andererseits kann eine ausreichende Abschreckgeschwindigkeit trotz des Durchhärtens erzielt werden.

Gemäß einer zweiten Lehre der vorliegenden Erfindung wird die oben hergeleitete Aufgabe durch ein Blech oder Halbzeug aus Stahl oder einer Stahllegierung gelöst, welches nach dem erfindungsgemäßen Verfahren partiell gehärtet, vorzugsweise durchgehärtet ist. Wie bereits zuvor beschrieben, weisen die erfindungsgemäßen Bleche oder Halbzeuge in den gehärteten Bereichen eine maximale Festigkeit aufgrund eines maximal reduzierten bzw. nicht vorhandenen Restaustenitgehaltes im Gefüge in diesen Bereichen auf.

Die erfindungsgemäßen Bleche oder Halbzeuge können darüber hinaus besonders gut dadurch im Kraftfahrzeugbau verwendet werden, dass das Blech oder Halbzeug das Deformationsverhalten bestimmende, partiell gehärtete oder durchgehärtete Bereiche aufweist. In diesem Fall ist das üblicherweise durchgeführte Einbringen von Sicken zur Bestimmung des Deformationsverhaltens nicht mehr notwendig, da selbst plane Bereiche von Blechen oder Halbzeugen mit einem genau definierten Deformationsverhalten hergestellt werden können.

Gemäß einer dritten Lehre der vorliegenden Erfindung wird die oben hergeleitete Aufgabe für eine gattungsgemäße Vorrichtung dadurch gelöst, dass Mittel zur Schutzbegasung vorgesehen sind, die eine Schutzbegasung mit einem Schutzgas oder einem Schutzgasgemisch in festem Aggregatzustand, insbesondere mit Trockeneis-Pellets ermöglichen. Gleichzeitig verhindert die Schutzbegasung eine Oxidation und dient simultan dem Abschrecken des erhitzten Blechs bzw. Halbzeugs unterhalb der Martensit-Finish-Temperatur oder auch unterhalb der Raumtemperatur. Mit der Vorrichtung können daher partiell gehärtete Bleche und Halbzeuge hergestellt werden, die in den gehärteten Bereichen einen maximal reduzierten oder keinen Restaustenitanteil enthalten und damit eine maximale Festigkeit aufweisen. In den nicht gehärteten Bereichen weist das Blech oder Halbzeug dagegen ein maximales Dehnungsverhalten auf.

Vorzugsweise wird die Vorrichtung so ausgestaltet, dass eine beidseitige Schutzbegasung des Blechs oder Halbzeugs ermöglichende Mittel vorgesehen sind. Die beidseitige Schutzbegasung verhindert eine Oxidation auch beim partiellen Durchhärten des Blechs oder Halbzeugs.

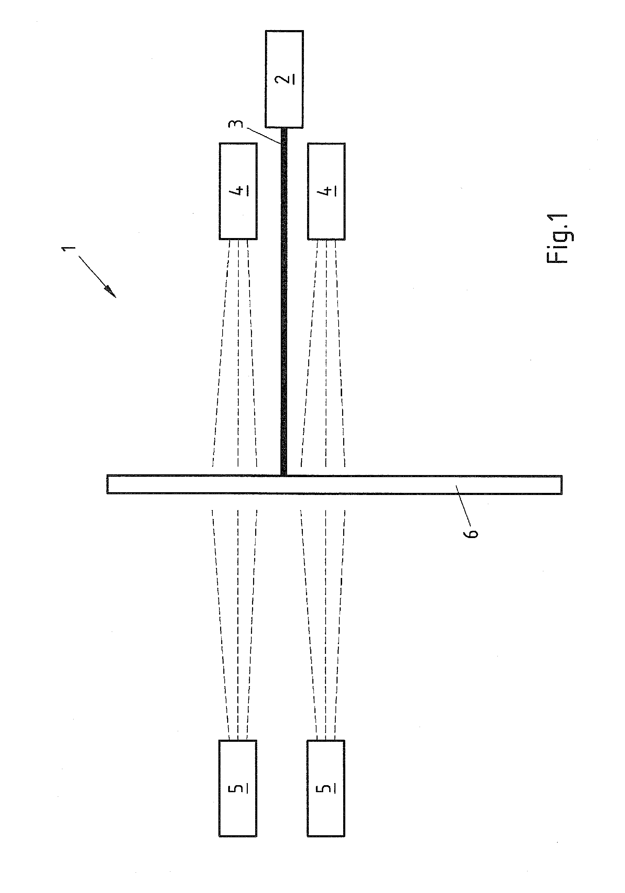

Es gibt nun eine Vielzahl von Möglichkeiten das erfindungsgemäße Verfahren bzw. die erfindungsgemäße Vorrichtung zum partiellen Härten eines Bleches oder Halbzeuges bzw. das erfindungsgemäße Blech oder Halbzeug auszugestalten und weiterzubilden. Hierzu wird verwiesen einerseits auf die den Patentansprüchen 1, 4 und 6 nachgeordneten Patentansprüche, andererseits auf die Beschreibung eines Ausführungsbeispiels einer erfindungsgemäßen Vorrichtung zum partiellen Härten von Blechen oder Halbzeugen in Verbindung mit der Zeichnung. Die Zeichnung zeigt in der einzigen Figur eine schematische Schnittansicht eines Ausführungsbeispiels einer erfindungsgemäßen Vorrichtung zum partiellen Härten von Blechen oder Halbzeugen.

Die in der einzigen Figur dargestellte Vorrichtung 1 zum partiellen Härten von Blechen oder Halbzeugen umfasst Mittel 2 zur Erzeugung eines Laserstrahls 3 und Mittel zur Schutzbegasung 4, 5. Die Mittel zur Schutzbegasung 4, 5 verwenden vorzugsweise auf -78 °C gekühlte Trockeneis-Pellets aus Kohlendioxid zur Schutzbegasung. Wie bereits ausgeführt führen diese beim Auftreffen auf die Oberfläche des Bleches 6 einerseits zu einem Reinigungseffekt, da eine eventuell vorhandene Schmutzschicht abplatzt und zudem durch die Sublimation des Trockeneises von der Oberfläche des Bleches abgesprengt wird. Andererseits führt die Schutzbegasung im Bereich des erhitzten Blechs zu einer Schutzhülle, so dass eine Oxidation des gehärteten Bereiches des Blechs 6 verhindert wird. Gleichzeitig wird durch die Schutzbegasung mit Trockeneis-Pellets eine Abschreckung des Bleches 6 unterhalb der Martensit-Finish-Temperatur erzwungen, so dass das Gefüge der gehärteten Blechbereiche einen maximal reduzierten, bevorzugt keinen Restaustenitanteil enthält. Der Martensitanteil des Gefüges lässt sich über die Schutzbegasung und der daraus resultierenden Blech- bzw. Halbzeugtemperatur einstellen. Damit kann auch das Dehnungsverhalten gezielt variiert werden. Die Schutzbegasungsmittel 4, 5 ermöglichen zudem eine beidseitige Schutzbegasung, so dass mittels des Laserstahls 3 auch ein Durchhärten des Bleches 6 erfolgen kann, ohne dass es auf einer Seite des Blechs oder Halbzeugs zu Oxidationen kommt. Das Blech 6 wird relativ zu der Anordnung der Schutzbegasungsmittel 4, 5 sowie der Mittel zur Erzeugung des Laserstrahls 2 bewegt, so dass ein flächiger Bereich des Blechs oder Halbzeugs gehärtet bzw. durchgehärtet werden kann. Durch die gezielte Anordnung der gehärteten bzw. durchgehärteten Bereiche auf dem Blech bzw. Halbzeug kann mit der erfindungsgemäßen Vorrichtung zudem die Herstellung von Halbzeugen, welche ein genau definiertes Deformationsverhalten aufweisen, erreicht werden.

## Patentansprüche

1. Verfahren zum partiellen Härten von Blechen oder Halbzeugen aus Stahl oder einer Stahllegierung, bei welchem zum partiellen Härten ein Laserstrahl verwendet wird und eine Schutzbegasung mit einem Schutzgas oder einem Schutzgasgemisch erfolgt,
**dadurch gekennzeichnet, dass** das Schutzgas oder Schutzgasgemisch zur Abschreckung des partiell erwärmten Blechs oder Halbzeugs verwendet wird und über die Schutzbegasung eine Abschreckung des partiell erwärmten Bereichs des Blechs oder Halbzeugs unterhalb der Martensit-Finish-Temperatur, vorzugsweise unterhalb der Raumtemperatur erfolgt.

2. Verfahren nach Anspruch 1,
**dadurch gekennzeichnet, dass** die Schutzbegasung mit einem Schutzgas oder einem Schutzgasgemisch in festem Aggregatzustand, vorzugsweise mit Kohlendioxid in Form von Trockeneis-Pellets erfolgt.

3. Verfahren nach Anspruch 1 oder 2,
**dadurch gekennzeichnet, dass** das Blech oder Halbzeug partiell durchgehärtet wird und die Schutzbegasung von beiden Seiten des Blechs oder Halbzeugs erfolgt.

4. Blech oder Halbzeug aus Stahl oder einer Stahllegierung partiell gehärtet, vorzugsweise durchgehärtet nach einem Verfahren nach Anspruch 1 bis 3.

5. Blech oder Halbzeug nach Anspruch 4,
**dadurch gekennzeichnet, dass** das Blech oder Halbzeug (6) das Deformationsverhalten bestimmende, partiell gehärtete oder durchgehärtete Bereiche aufweist.

6. Vorrichtung zum partiellen Härten von Blechen oder Halbzeugen aus Stahl oder einer Stahllegierung, mit Mitteln (2) zur Erzeugung eines Laserstrahls (3) zum partiellen Härten eines Blechs oder eines Halbzeugs und Mitteln zur Schutzbegasung des Blechs oder Halbzeugs zumindest im Bereich des Laserstrahls, insbesondere zur Durchführung eines Verfahrens nach einem der Ansprüche 1 bis 3,
**dadurch gekennzeichnet, dass** Mittel (4,5) zur Schutzbegasung vorgesehen sind, die eine Schutzbegasung mit einem Schutzgas oder einem Schutzgasgemisch in festem Aggregatzustand, insbesondere mit Trockeneis-Pellets ermöglichen.

7. Vorrichtung nach Anspruch 6,
**dadurch gekennzeichnet, dass** eine beidseitige Schutzbegasung des Blechs oder Halbzeugs ermöglichende Mittel (4,5) vorgesehen sind.
